(19) Europäisches Patentamt
European Patent Office
Office européen des brevets

(11) EP 0 842 972 A1

# (12) EUROPEAN PATENT APPLICATION

(43) Date of publication:
**20.05.1998 Bulletin 1998/21**

(51) Int. Cl.[6]: **C08J 9/14**
// C08L75:06

(21) Application number: **97119618.3**

(22) Date of filing: **10.11.1997**

(84) Designated Contracting States:
**AT BE CH DE DK ES FI FR GB GR IE IT LI LU MC NL PT SE**
Designated Extension States:
**AL LT LV MK RO SI**

(30) Priority: **18.11.1996 US 751879**
**11.06.1997 US 873302**

(71) Applicant:
**THE CELOTEX CORPORATION**
**Tampa Florida 33607-5750 (US)**

(72) Inventors:
- **Londrigan, Michael E.**
**Clearwater, FL 34621 (US)**
- **Monda, Perry F.**
**Palmetto, FL 34221 (US)**

(74) Representative:
**Kraus, Walter, Dr. et al**
**Patentanwälte Kraus, Weisert & Partner**
**Thomas-Wimmer-Ring 15**
**80539 München (DE)**

## (54) Foams made with polyester polyols and hydrofluorocarbons as blowing agents

(57) A closed cell, rigid, isocyanate-based polymer foam which comprises the reaction product of a polyisocyanate and a polyester polyol or a mixture of a polyester polyol and at least one other isocyanate-reactive compound in the presence of a blowing agent comprising a hydrofluorocarbon having 3 to 7 carbon atoms and no chlorine atom or a mixture of the hydrofluorocarbon and at least one co-blowing agent.

EP 0 842 972 A1

## Description

### BACKGROUND OF THE INVENTION

1. Field of the Invention

This invention relates to the preparation of rigid cellular polyisocyanate based polymers prepared from foam formulations containing a polyester polyol and a blowing agent comprising a hydrofluorocarbon or a mixture of a hydrofluorocarbon with at least one other blowing agent.

2. Description of the Prior Art

It is well known in the manufacture of rigid polyurethane and polyisocyanurate foams to employ chlorofluorocarbons, such as trichlorofluoromethane, as the blowing agent. These chlorofluorocarbon compounds boil or exhibit a significant vapor pressure at ambient temperatures and are volatilized during the exothermic reaction of an isocyanate with an active hydrogen-containing compound, such as a polyol. The expanding gas is entrapped within the reaction mixture and forms an insulating cellular structure. While the foam industry has had good results using the conventional chlorofluorocarbon blowing agents, such as CFC-11, the agents have come under attack in recent years on the ground that they are believed to give rise to environmental problems concerned with ozone depletion in the stratosphere. Accordingly, the search is ongoing for alternative blowing agents with a low ozone depletion factor to replace the conventional ones.

It is believed that hydrochlorofluorocarbons (also known as HCFCs), which are partially halo-substituted hydrocarbons, present less risk than the CFCs. Because the HCFCs contain one or more hydrogen atoms, they more readily dissociate under conditions encountered in the atmosphere, and therefore, less of them would reach the ozone layer of the stratosphere in a form which could cause significant damage. Accordingly, the hydrogen-containing halocarbons are being used as alternatives for CFC-11 in rigid foam applications. However, HCFCs, which contain chlorine, also have some ozone-depletion potential. There is therefore mounting pressure to find substitutes for the HCFCs as well as the CFCs.

The search for acceptable alternative blowing agents is complicated because of tie combination of performance characteristics desired of them. One quite important characteristic is that use of the agents must not cause unacceptable cell shrinkage in the finished foam products at low temperatures. In this regard, it has been found that closed-cell polyisocyanurate foam made with a hydrochlorofluorocarbon such as HCFC-141b shrinks at low temperatures. It is also desired that the blowing agents have an appropriately low flammability and toxicity. The agents further must not react with the other components of the foam formulation and should be adequately miscible in the foam system. Also, their boiling point, vapor thermal conductivity, capacity to efficiently produce gas ad diffusion rate must be appropriate for the formation of highly insulating foams. Finally, the alternative blowing agents should desirably be reasonable in cost.

There still remains a need for a closed cell, rigid foam which has superior properties even though the conventional CFC blowing agents are avoided in its production.

### OBJECTS OF THE INVENTION

It is therefore an object of the present invention to provide improved closed cell, rigid foams, especially polyurethane and polyisocyanurate foams, from foam-forming compositions which contain a blowing agent having no ozone-depleting chlorine.

It is another object of the present invention to produce improved rigid polyurethane and polyisocyanurate foams having a combination of advantageous properties, including a superior resistance to cell shrinkage, especially at low temperatures.

It is still another object of the present invention to provide for the production, from a foam-forming composition containing a polyester polyol and an alternative blowing agent, of polyurethane and polyisocyanurate foams having a combination of desirable properties, including an appropriate reactivity profile, a reduced friability, good dimensional stability, and high thermal stability, insulation value and compressive strength.

It is a further object of the present invention to provide closed cell, rigid foam materials which can be used in building panels which are highly insulating, dimensionally stable, thermally resistant, soundproof and self-supporting.

### SUMMARY OF THE INVENTION

The above objects have been achieved through the production of rigid closed-celled polyisocyanate-based foam by reacting at least one organic polyisocyanate with at least one polyester polyol in the presence of a blowing agent composition comprising one or more fluorinated compounds which advantageously do not contain a chlorine atom. A preferred blowing agent of the invention comprises a partially fluorinated alkane having 3 to 7 carbon atoms.

Incorporation of the fluorinated blowing agent in the polyisocyanate-based foam-forming mixtures has been found to yield foams having an exceedingly high resistance to shrinkage and other fine properties. The fluorinated compound may comprise from a minor amount, e.g., 10 mole %, up to 100 mole % of the blowing agent component used in the foam formation. Replacement, according to the present invention, of the conventionally used hydrochlorofluorocarbons in whole or in part by partially fluorinated blowing agents containing no chlorine results in the production of polyurethane and polyisocyanurate foams having both improved properties and a reduced potential for environmental damage.

The improved foams of the invention are suitably prepared from reactants comprising a polyisocyanate and a polyester polyol, preferably an aromatic polyester polyol, which are brought together in the presence of the fluorine-containing blowing agent and auxiliaries and additives as required (e.g., a surfactant). Preferably, at least 20 mole %, in particular 40-90 mole %, of the blowing agent consists of at least one fluorine-containing compound of the invention. In a preferred embodiment, water is not used as a co-blowing agent with the fluorine-containing compound of the invention.

The polyisocyanate component employed in the preparation of the cellular polymers of the invention can be any of the polyisocyanates known to be useful in the art of polymer formation. A preferred group of polyisocyanates are the aromatic polyisocyanates, especially methylene-bridged polyphenyl polyisocyanate mixtures.

The polyisocyanate is reacted with the polyester polyol or its mixture with at least one other isocyanate-reactive compound, such as a polyether polyol. In a preferred embodiment of the invention, the polyol component comprises 50 to 100% by weight of the polyester polyol, preferably an aromatic polyester polyol containing phthalic acid residues.

DETAILED DESCRIPTION OF THE INVENTION

The combined use of a partially fluorine substituted blowing agent having no chlorine atoms and a polyester polyol provides rigid plastic foams characterized by a combination of superior physical properties. The foams are substantially improved in compressive strength and low temperature dimensional stability over foams produced using the chlorine-containing HCFC-141b. The enhanced foam properties obtainable through use of the "chlorine-free" blowing agents are especially significant since these agents do not negatively affect the ozone layer of the earth's atmosphere.

Preferred fluorinated blowing agents for use in the present invention are polyfluorocarbons, especially $C_{3-7}$ polyfluorocarbons, such as the $C_{3-7}$ polyfluoroalkanes, -alkenes, -cycloalkanes, and -cycloalkenes. Particularly preferred polyfluoroalkanes have the formula

$$CX_3\text{-}CY_2\text{-}R \qquad (I)$$

wherein each of the X radicals independently represents hydrogen or fluorine and either:

(1) the $CY_2$ radical represents $CH_2$, CHF or $CH(CF_3)$ and R represents $CH_2F$, $CHF_2$, $CH_3$, $CF_3$, $CF_2\text{-}CH_3$, $CF_2\text{-}CH_2F$, $CH_2\text{-}CH_3$, $CH_2\text{-}CH_2\text{-}CH_3$, or $CH(CH_3)\text{-}CH_3$; or
(2) the $CY_2$ radical represents $CF_2$ and R represents $CH_2F$, $CHF_2$, $CH_3$, $CF_2\text{-}CH_3$, $CF_2\text{-}CH_2F$, $CH_2\text{-}CH_3$, $CH_2\text{-}CH_2\text{-}CH_3$, or $CH(CH_3)\text{-}CH_3$;

wherein the polyfluoroalkane contains at least two fluorine atoms, and
wherein when the $CY_2$ radical represents a $\text{-}CH_2\text{-}$ group and the R radical represents a $\text{-}CH_2\text{-}CH_3$ group, respectively, then the $CX_3$ radical represents a $CHF_2$ -group.

Especially suitable compounds of the formula (I) have $X_3$, $Y_2$ and R present in one of the combinations listed in the following table:

TABLE

| $X_3$ | $Y_2$ | R |
|---|---|---|
| $F_3$ | $H_2$ | $CH_2F$ |
| $F_3$ | HF | $CH_2F$ |
| $F_3$ | $H_2$ | $CHF_2$ |
| $HF_2$ | $F_2$ | $CH_2F$ |
| $F_3$ | HF | $CH_3$ |

TABLE (continued)

| $X_3$ | $Y_2$ | R |
|---|---|---|
| $H_3$ | $F_2$ | $CH_3$ |
| $F_3$ | $F_2$ | $CF_2$-$CH_3$ |
| $F_3$ | HF | $CF_2$-$CH_3$ |
| $F_3$ | $H_2$ | $CF_2$-$CFH_2$ |
| $F_3$ | $H_2$ | $CH_2$-$CH_3$ |
| $H_3$ | $F_2$ | $CF_2$-$CH_3$ |
| $F_3$ | $H_2$ | $CF_2$-$CH_3$ |
| $F_3$ | $HCF_3$ | $CH_3$ |
| $F_3$ | $H_2$ | $CH_2$-$CH_2$-$CH_3$ |
| $F_3$ | $H_2$ | -CH($CH_3$)-$CH_3$ |
| $F_3$ | $H_2$ | $CF_3$ |
| $F_3$ | $F_2$ | $CH_3$ |
| $HF_2$ | HF | $CHF_2$ |

The polyfluoroalkanes of the formula (I) are known and are described, for example, in U.S. Patent No. 5,496,866, the disclosure of which is incorporated herein by reference.

A wide variety of co-blowing agent(s) can be employed in conjunction with the above fluorinated agents in preparing the foam compositions of the invention. Water, air, nitrogen, carbon dioxide, readily volatile organic substances and/or compounds which decompose to liberate gases (e.g., azo compounds) may be used. Typically, these co-blowing agents are liquids having a boiling point between minus 50°C and plus 100°C, and preferably between -50°C and +50°C.

Especially useful co-blowing agents are the other hydrogen atom-containing blowing agents. These alternative agents can be selected from a broad range of materials, including partially halogenated hydrocarbons, ethers, and esters, hydrocarbons, esters, ethers, and the like. Among the usable hydrogen-containing co-blowing agents are the HCFCs such as 1,1-dichloro-1-fluoroethane (HCFC-141b), 1,1-dichloro-2,2,2-trifluoroethane (HCFC-123), monochlorodifluoromethane (HCFC-22), and 1-chloro-1,1-difluoroethane (HCFC-142b); the HFCs such as 1,1-difluoroethane (HFC-152a), 1,1,1,2-tetrafluoroethane (HFC-134a) and pentafluoroethane (HFC-125); the HFE's such as methyl-1,1,1-trifluoroethylether (HFE-263) and difluoromethyl-1,1,1-trifluoro-ethylether (HFE-245); and the hydrocarbons such as n-pentane, isopentane, and cyclopentane.

The blowing agents are employed in an amount sufficient to give the resultant foam the desired bulk density which is generally between 0.5 and 10, preferably between 1 and 5, and most preferably between 1.5 and 2.5, pounds per cubic foot. The blowing agents generally comprise from 1 to 30, and preferably comprise from 4 to 20 weight percent of the composition. When a blowing agent has a boiling point at or below ambient, it is maintained under pressure until mixed with the other components.

The polymer foams of the present invention can be prepared by using standard techniques known to those skilled in the art. The resultant closed cell, rigid polymer Foams comprise the reaction product of a polyisocyanate and an isocyanate-reactive component comprising a polyester polyol in the presence of a blowing agent comprising a hydrofluorocarbon, particularly a polyfluorocarbon, or a mixture of the hydrofluorocarbon and at least one co-blowing agent, wherein the hydrofluorocarbon advantageously contains 3 to 7 carbon atoms, at least two fluorine atoms and no chlorine atom. The hydrofluorocarbon is found to substantially reduce the foam's cold temperature shrinkage (measured after exposure to a temperature ≤ 0°F. for 18 hours), as compared to the foam having the same density and prepared from the same foam-forming ingredients except that the hydrofluorocarbon is replaced by 1,1-dichloro-1-fluoroethane (HCFC-141b). In any blend of the hydrofluorocarbon with a co-blowing agent(s), the latter agent or agents and the amount thereof are advantageously chosen so as not to augment the foam's shrinkage beyond the value realized from use of HCFC-141b as the sole blowing agent. The co-blowing agent(s) may suitably amount to 50 to 70 mole % of the blowing agent mixture.

The invention is particularly applicable to the preparation of polyisocyanurate and polyurethane foams. These foams are prepared by reacting together under foam-forming conditions an organic polyisocyanate with an isocyanate-reactive component which comprises (a) the polyester polyol or (b) a mixture of the polyester polyol with at least one

other isocyanate-reactive compound (e.g., other polyol), the content of polyester polyol in mixture (b) generally being at least about 50 percent by weight. The polyisocyanurate and polyurethane foams typically can be prepared by mixing together the organic polyisocyanate with the polyol, catalyst and blowing agent at temperatures ranging from about 0°C. to 150°C.

The polyurethane foams can be prepared by reacting the polyol and polyisocyanate on an essentially 1:1 to 1:1.25 equivalent basis. In the embodiment wherein the polyester polyol is combined with another polyol(s) to produce polyurethane Foams, the polyester polyol can comprise about 5 to 100, preferably about 40 to 100 and more preferably about 50 to 100, weight percent of the total polyol content in the foam preparations.

The polyisocyanurate foams of the invention are prepared by reacting the polyisocyanate with a minor amount of polyol, such as sufficient polyol to provide about 0.10 to 0.70 hydroxyl equivalents of polyol per equivalent of said polyisocyanate, wherein the polyester polyol comprises about 5 to 100, and preferably about 50 to 100, weight percent of the total polyol content in the foam preparations.

The polyisocyanate component employed in the foam preparation can be any of the polyisocyanates known to be useful in the art of polymer formation. The organic di- or polyisocyanates of the invention include aliphatic, cycloaliphatic, araliphatic, aromatic and heterocyclic polyisocyanates and combinations thereof characterized in having two or more isocyanate (NCO) groups per molecule.

Among the many isocyanates suitable for the practice of the subject invention are, for example, tetramethylene, hexamethylene, octamethylene and decamethylene diisocyanates, and their alkyl substituted homologs, 1,2-, 1,3- and 1,4-cyclohexane diisocyanates, 2,4- and 2,6-methyl-cyclohexane diisocyanates, 4,4'- and 2,4'-dicyclohexyl-diisocyanates, 4,4'- and 2,4'-dicyclohexylmethane diisocyanates, 1,3,5-cyclohexane triisocyanates, saturated (hydrogenated) polymethylenepolyphenylenepolyisocyanates, isocyanatomethylcyclohexane isocyanates, isocyanatoethylcyclohexane isocyanates, bis(isocyanatomethyl)-cyclohexane diisocyanates, 4,4'- and 2,4'-bis(isocyanatomethyl) dicyclohexane, isophorone diisocyanate, 1,2-, 1,3-, and 1,4-phenylene diisocyanates, 2,4- and 2,6-toluene diisocyanate, 2,4'-, 4,4'- and 2,2-biphenyl diisocyanates, 2,2'-, 2,4'- and 4,4'- diphenylmethane diisocyanates, polymethylenepolyphenylene-polyisocyanates (polymeric MDI), and aromatic aliphatic isocyanates such as 1,2-, 1,3-, and 1,4-xylylene diisocyanates.

Organic isocyanates containing heteroatoms may also be utilized, for example those derived from melamine. Modified polyisocyanates, such as carbodiimide or isocyanurate can also be employed. Liquid carbodiimide group- and/or isocyanurate ring-containing polyisocyanates having isocyanate contents from 15 to 33.6 percent by weight, preferably from 21 to 31 percent by weight, are also effective, for example, those based on 4,4'-, 2,4'-, and/or 2,2'-diphenylmethane diisocyanate and/or 2,4- and/or 2,6-toluene diisocyanate, and preferably 2,4- and 2,6-toluene diisocyanate and the corresponding isomer mixtures, 4,4'-, 2,4', and 2,2'-diphenylmethane diisocyanates as well as the corresponding isomer mixtures, for example, mixtures of 4,4'- and 2,4'-diphenylmethane diisocyanates, mixtures of diphenylmethane diisocyanates and polyphenyl polymethylene polyisocyanates (polymeric MDI), and mixtures of toluene diisocyanates and polymeric MDI. Preferred, however, are the aromatic diisocyanates and polyisocyanates. Particularly preferred are 2,4-, and 2,6-toluene diisocyanate and mixtures thereof (TDI), 2,4'-, 2,2'- and 4,4'-diphenylmethane diisocyanate (MDI), polymethylenepolyphenylenepolyisocyanates (polymeric MDI), and mixtures of the above preferred isocyanates.

Most particularly preferred are the polymeric MDI's.

Still other useful organic polyisocyanates are isocyanate terminated quasi-prepolymers. These quasi-prepolymers are prepared by reacting excess organic polyisocyanate or mixtures thereof with a minor amount of an active hydrogen-containing compound. Suitable active hydrogen containing compounds for preparing the quasi-prepolymers hereof are those containing at least two active hydrogen-containing groups which are isocyanate reactive. Typifying such compounds are hydroxyl-containing polyesters, polyalkylene ether polyols, hydroxyl-terminated polyurethane oligomers, polyhydric polythioethers, ethylene oxide adducts of phosphorous-containing acids, polyacetals, aliphatic polyols, aliphatic thiols including alkane, alkene and alkyne thiols having two or more SH groups; as well as mixtures thereof. Compounds which contain two or more different groups within the above-defined classes may also be used such as, for example, compounds which contain both an SH group and an OH group. Highly useful quasi-prepolymers are disclosed in U.S. Patent No. 4,791,148 and U.S. application Serial No. 07/342,508, filed April 24, 1989, the disclosures of which with respect to the quasi-prepolymers are hereby incorporated by reference.

In addition to the polyisocyanate, the inventive foam-forming formulation also includes the polyester polyol or combinations of polyester polyol with another isocyanate-reactive compound(s), such as other polyols, polyamines, polyacids, polymercaptans and like compounds.

The polyester polyols can be prepared by known procedures from a polycarboxylic acid component comprising a polycarboxylic acid or acid derivative, such as an anhydride or ester of the polycarboxylic acid, and any polyol component. The polyol component advantageously comprises a glycol(s) or a glycol-containing mixture of polyols. The polyacid and/or polyol components may, of course, be used as mixtures of two or more compounds in the preparation of the polyester polyols. Particularly suitable polyester polyols for use in the foam production are aromatic polyester polyols containing phthalic acid residues.

The production of the polyester polyols is accomplished by simply reacting the polycarboxylic acid or acid derivative with the polyol component in a known manner until the hydroxyl and acid values of the reaction mixture fall in the desired range.

After transesterification or esterification, the reaction product can be reacted with an alkylene oxide to form a polyester polyol mixture of the invention. This reaction desirably is catalyzed. The temperature of this process should be from about 80° to 170°C, and the pressure should generally range from about 1 to 40 atmospheres.

The polycarboxylic acid component, which is advantageously dibasic, may be aliphatic, cycloaliphatic, aromatic and/or heterocyclic and may optionally be substituted, for example, by halogen atoms, and/or may be unsaturated. Examples of suitable carboxylic acids and derivatives thereof for the preparation of the polyester polyols include: oxalic acid; malonic acid; succinic acid; glutaric acid; adipic acid; pimelic acid; suberic acid; azelaic acid; sebacic acid; phthalic acid; isophthalic acid; trimellitic acid; terepbthalic acid; phthalic acid anhydride; tetrahydrophthalic acid anhydride; pyromellitic dianhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dibasic and tribasic unsaturated fatty acids optionally mixed with monobasic unsaturated fatty acids, such as oleic acid; terephthalic acid dimethyl ester and terephthalic acid-bis glycol ester.

Polyester polyols whose acid component advantageously comprises at least about 30% by weight of phthalic acid residues are particularly useful. By phthalic acid residue is meant the group

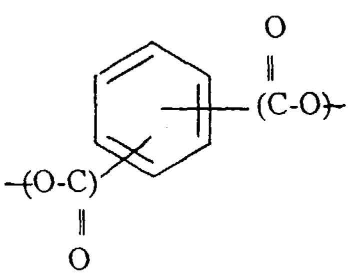

While the aromatic polyester polyols can be prepared from substantially pure reactant materials, more complex ingredients are advantageously used, such as the side-stream, waste or scrap residues from the manufacture of phthalic acid, terephthalic acid, dimethyl terephthalate, polyethylene terephthalate, and the like. Particularly suitable compositions containing phthalic acid residues For use in the invention are (a) ester-containing by-products from the manufacture of dimethyl terephthalate, (b) scrap polyalkylene terephthalates, (c) phthalic anhydride, (d) residues from the manufacture of phthalic acid or phthalic anhydride, (e) terephthalic acid, (f) residues from the manufacture of terephthalic acid, (g) isophthalic acid, (h) trimellitic anhydride, and (i) combinations thereof. These compositions may be converted by reaction with the polyol component, e.g., glycol or glycol mixtures, to polyester polyols through conventional transesterification or esterification procedures.

A preferred polycarboxylic acid component for use in the preparation of the aromatic polyester polyols is phthalic anhydride. This component can be replaced by phthalic acid or a phthalic anhydride bottoms composition, a phthalic anhydride crude composition, or a phthalic anhydride light ends composition, as such compositions are defined in U. S. Patent No. 4,529,744.

Other preferred materials containing phthalic acid residues are polyalkylene terephthalates, especially polyethylene terephthalate (PET), residues or scraps and byproduct terephthalic acid streams.

Still other preferred residues are DMT process residues, which are produced from the manufacture of dimethyl terephthalate (DMT). During the manufacture of DMT in which p-xylene is converted through oxidation and esterification with methanol, the desired product is obtained in a reaction mixture along with a complex mixture of by-products. The desired DMT and the volatile methyl p-toluate by-product are removed from the reaction mixture by distillation leaving a residue. The DMT and methyl p-toluate are separated, the DMT is recovered and methyl p-toluate is recycled for oxidation. The residue which remains can be directly purged from the process or a portion of the residue can be recycled for oxidation and the remainder diverted from the process, or, if desired, the residue can be processed further, as, for example, by distillation, heat treatment and/or methanolysis to recover useful constituents which might otherwise be lost, prior to purging the final residue from the system.

These DMT process residues may contain DMT, substituted benzenes, polycarbomethoxy diphenyls, benzyl esters of the toluate family, dicarbomethoxy fluorenone, carbomethoxy benzocoumarins and carbomethoxy polyphenols. Cape Industries, Inc. sells DMT process residues under the trademark Terate®101. DMT process residues having a different composition but still containing the aromatic esters and acids are also sold by DuPont and others. The DMT process

residues to be transesterified in accordance with the present invention preferably have a functionality at least slightly greater than 2.

Such suitable residues include those disclosed in U.S. Patent Nos. 3,647,759, 4,411,949, 4,714,717, and 4,897,429, the disclosures of which with respect to the residues are hereby incorporated by reference.

The polyester polyols are prepared from the above described polycarboxylic acid components and any polyol component The polyols can be aliphatic, cycloaliphatic, aromatic and/or heterocyclic. Low molecular weight aliphatic polyhydric alcohols, such as aliphatic dihydric alcohols having no more than about 20 carbon atoms are highly satisfactory. The polyols optionally may include substituents which are inert in the reaction, for example, chlorine and bromine substituents, and/or may be unsaturated. Suitable amino alcohols, such as, for example, monoethanolamine, diethanolamine, triethanolamine, or the like, may also be used. Moreover, the polycarboxylic acid(s) may be condensed with a mixture of polyhydric alcohols and amino alcohols.

A preferred polyol component for reaction with the polycarboxylic acid compound is a glycol. The glycols may contain heteroatoms (e.g., thiodiglycol) or may be composed solely of carbon, hydrogen, and oxygen. They are advantageously simple glycols of the general formula $C_nH_{2n}(OH)_2$ or polyglycols distinguished by intervening ether linkages in the hydrocarbon chain, as represented by the general formula $C_nH_{2n}O_x(OH)_2$. In a preferred embodiment of the invention, the glycol is a low molecular weight aliphatic diol of the generic formula:

$$HO\text{-}R\text{-}OH$$

wherein R is a divalent radical selected from the group consisting of:

(a) alkylene radicals each containing from 2 through 6 carbon atoms,
(b) radicals of the formula:

$$-(R^1O)_m\text{-}R^1\text{-}$$

wherein $R^1$ is an alkylene radical containing from 2 through 6 carbon atoms, and m is an integer of from 1 through 4, and
(c) mixtures thereof.

Examples of suitable polyhydric alcohols include: ethylene glycol; propylene glycol-(1,2) and -(1,3); butylene glycol-(1,4) and -(2,3); hexane diol-(1,6); octane diol-(1,8); neopentyl glycol; 1,4-bishydroxymethyl cyclohexane; 2-methyl-1,3-propane diol; glycerin; trimethylopropane; trimethyloethane; hexane triol-(1,2,6); butane triol-(1,2,4); pentaerythritol; quinol; mannitol; sorbitol; methyl glucoside; diethylene glycol; triethylene glycol; tetraethylene glycol and higher polyethylene glycols; dipropylene glycol and higher polypropylene glycols as well as dibutylene glycol and higher polybutylene glycols. Especially suitable polyols are alkylene glycols and oxyalkylene glycols, such as ethylene glycol, diethylene glycol, dipropylene glycol, triethylene glycol, tripropylene glycol, tetraethylene glycol, tetrapropylene glycol, trimethylene glycol and tetramethylene glycol, and 1,4-cyclohexanedimethanol (1,4-bis-hydroxymethyl-cyclohexane).

The term "polyester polyol" is used in this specification and claims in the conventional sense and includes any unreacted alcohol (e.g., glycol) used in and remaining after the preparation of the polyester polyol and/or such alcohol added after the preparation. The unreacted glycol is commonly called "free glycol". Typically, polyester polyols currently employed in producing polyurethane and polyisocyanurate foams have free glycol levels which are at least about 7-12 percent by weight of the total polyester polyol and can range up to about 25-30 weight percent of the total.

The polyester polyols advantageously have an average functionality of about 1.8 to 8, preferably about 1.8 to 5, and more preferably about 2 to 2.5. Their hydroxyl number values generally fall within a range of about 15 to 750, preferably about 30 to 550, and more preferably about 100 to 550, and their free glycol content generally is from about 0 to 40, preferably from 2 to 30, and more preferably from 2 to 15, weight percent of the total polyester polyol component.

Examples of suitable polyester polyols are those derived from PET scrap and available under the designation Terol 235 and Terol 250 from Oxid, and Chardol 170, 336A, 560, 570, 571 and 572 and Freol 30-2150 from Cook Composites and Polymers. Examples of suitable DMT derived polyester polyols are Terate® 202, 203, 204, 214, 215, 254, 254A and 2541 polyols, which are available from Cape Industries. Phthalic anhydride derived-polyester polyols are commercially available under the designation Pluracol® 9118 from BASF Corporation, and Stepanpol PS-2002, PS-2352, PS-2402, PS-2502A, PS-2502, PS-2522, PS-2852, PS-2852E, PS-2552, and PS-3152 from Stepan Company. Especially useful polyester polyols are Terol 235, Terol 250, Stepanpol PS-2352, Terate 214, Terate 215, and Terate 2541.

In an advantageous embodiment of the invention, the polyester polyols are employed in admixture with at least one other polyol in the production of the foam compositions of the invention, especially the polyurethane foams. Polyols which can be employed in such admixtures include monomeric polyols and polyether polyols. Suitable polyether polyols are the reaction products of a polyfunctional active hydrogen initiator and a monomeric unit such as ethylene oxide, propylene oxide, butylene oxide and mixtures thereof, preferably propylene oxide, ethylene oxide or mixed propylene oxide and ethylene oxide. The polyfunctional active hydrogen initiator preferably has a functionality of 2-8, and more preferably has a functionality of 3 or greater (e.g., 4-8).

Any of the catalysts conventionally employed in the art to catalyze the reaction of an isocyanate with an isocyanate-reactive compound can be employed in the foam preparations of the invention. Such catalysts include organic and inorganic acid salts of, and organometallic derivatives of, bismuth, lead, tin, iron, antimony, uranium, cadmium, cobalt, thorium, aluminum, mercury, zinc, nickel, cerium, molybdenum, vanadium, copper, manganese, and zirconium, as well as phosphines and tertiary organic amines. Examples of such catalysts are dibutylin dilaurate, dibutyltin diacetate, stannous octoate, lead octoate, colbalt naphthenate, triethylamine, triethylenediamine, N,N,N',N'-tetramethylethylenediamine, 1,1,3,3-tetramethylguanidine, N,N,N'N'-tetramethyl-1,3-butanediamine,N,N-dimethylethanolamine, N,N-diethylethanolamine, and the like.

In the preparation of the polyisocyanurate rigid foams, any catalyst that will induce reaction of the isocyanate with the polyol and will induce isocyanurate ring formation can be employed in the foam preparations of the invention. Most commonly used trimerization catalysts also function to catalyst the reaction of polyol and isocyanate to form urethane. However, a separate catalyst may, if desired, be used for urethane formation. The trimerization catalysts include metal carboxylates, tertiary amine trimerization catalysts, quaternary ammonium carboxylates, alkali metal alkoxides, alkali metal phenoxides and the like. Representative metal carboxylates are sodium and potassium formates, acetates, and 2-ethylhexanoates. Tertiary amine catalysts include 1,3,5-tris (N,N-dimethylaminopropyl)-s-hexahydrotriazine, o- and p-(dimethylaminomethyl) phenols and 2,4,6-tris(dimethyl-aminomethyl) phenol and the quaternary ammonium salts include N-hydroxyl-alkyl quaternary ammonium carboxylates and tetramethylammonium formate, acetate,2-ethylhexanoate and the like. Suitable urethane catalysts include, for instance, tertiary amines such as triethyl amine, N,N-dimethylcyclohexylamine, pentamethyldiethylenetriamine and N,N-dimethylethanolamine as well as 1,4-diazabicyclo [2.2.2] octane and organo tin compounds such as dibutyltin diacetate, stannous octoate and dibutyltin dilaurate.

The catalyst or catalyst mixture is used in a catalytically effective amount. Generally, the catalyst comprises from about 0.1 to 20 and preferably from about 0.3 to 10 weight percent of the total foam-forming composition.

Any suitable surfactant can be employed in the foams of this invention. Successful results have been obtained with silicone/ethylene oxide/propylene oxide copolymers as surfactants. Examples of surfactants useful in the present invention include, among others, polydimethylsiloxane-polyoxyalkylene block copolymers available from OSi Specialties, Inc. under the trade names Y-10222, Y-10764, Y-10816, Y-10884, L-5420 id L-5340, from the Dow Corning Corporation under the trade names DC-193 and DC-5315, and from Goldschmidt Chemical Corporation under the tradenames B-8408 and B-8407. Other suitable surfactants are polyoxyalkylen/unsaturated diester reaction products, which are described in U.S. Pat. No. 4,365,024. It has been found that surfactants such as Y-10764 and Y-10816 can contribute significantly to an increase in foam insulation value. Generally, the surfactant comprises from about 0.05 to 10, and preferably from 0.1 to 6, weight percent of the foam-forming composition.

Other additives may also be included in the foam formulations. Included are processing aids, viscosity reducers, such as 1-methyl-2-pyrrolidinone, propylene carbonate, norreactive and reactive flame retardants, such as tris(2-chloroethyl)-phosphate and a mixture of B-chloropropyl phosphate esters with isomeric chloropropyl groups wherein the isopropyl structure predominates, dispersing agents, plasticizers, mold release agents, antioxidants, compatibility agents, and fillers and pigments (e.g., carbon black and silica). The use of such additives is well known to those skilled in the art.

The present invention also provides a process for producing a laminate which comprises (a) contacting at least one facing sheet with a foam-forming mixture comprising the polyisocyanate, polyester polyol, blowing agent, and auxiliaries and additives as required (e.g., a surfactant), and (b) foaming the foam-forming mixture, The process is advantageously conducted in a continuous manner by depositing the foam-forming mixture on a facing sheet being conveyed along a prbduction line, and preferably placing another facing sheet on the deposited mixture. The foam-forming mixture is conveniently thermally cured at a temperature from about 20°C to 150°C in a suitable apparatus, such as an oven or heated mold. Both free rise and restrained rise processes, such as disclosed in U.S. Patent No. 4,572,865, may be employed in the foam production.

Any facing sheet previously employed to produce building panels can be employed in the present invention. Examples of suitable facing sheets include, among others, those of kraft paper, aluminum, glass mats, glass reinforced organic felts, and asphalt impregnated felts, as well as laminates of two or more of the above.

The foam materials of the invention can also be used, with or without a facer(s), for pipe insulation and other insulating purposes.

The foam materials of the invention can contain various reinforcement materials, such as a quantity of glass fibers, as described in U.S. Patent Nos. 4,118,533 and 4,284,683, the disclosures of which are hereby incorporated by reference.

The invention is further illustrated by the following examples in which all parts and percentages are by weight unless otherwise indicated.

EXAMPLE 1

This example illustrates the synthesis of polyisocyanurate foams (12% trimer) utilizing the blowing agents HFC-245 ca, HFC-245eb, HFC-245fa, and HCFC-141b.

The foams were prepared from the ingredients and quantities thereof shown in the following Table 1. In each foam preparation, the A-components were blended, cooled and introduced into a quart can. The A-components for Foams A, B and D were cooled to 60°F. and for Foam C to 50°F. before addition to their respective cans. Then the B-component (for Foam D) or components (for Foams A-C), after blending, were added to each can. Before the addition, all B-components were at room temperature, except for those for Foam C, which were cooled to 50°F. Following the addition, all ingredients were stirred rapidly for 15-20 seconds. The catalyst (C-component) was then mixed into the contents of the vessel. All ingredients were thereafter mixed vigorously for an additional 10 seconds, yielding a polyisocyanurate foam.

Important properties of the resultant foams are shown in Table I. As shown in the table, use of the HFC blowing agents resulted in foams having overall good properties. The data show improvements in the HFC blown foams' friability and strength, as compared to the comparative HCFC-141b blown foam.

TABLE I

| SYNTHESIS AND PROPERTIES OF POLYISOCYANURATE FOAMS | | | | |
|---|---|---|---|---|
| INGREDIENTS | FOAMS | | | |
| A-Components | A | B | C | D |
| Mondur MR-200[1] | 185.3 | 185.3 | 185.3 | 185.68 |
| HFC-245ca | 28.43 | | | |
| HFC-245eb | | 33.12 | | |
| HFC-245fa | | | 27.09 | |
| HCFC-141b | | | | 42.0 |
| Silicone surfactant | 3.0 | 3.0 | 3.0 | 2.2 |
| B-Components | | | | |
| Terate 2541[2] | 114.7 | 114.7 | 114.7 | 114.32 |
| HFC-245ca | 25.17 | | | |
| HFC-245eb | | 25.17 | | |
| HFC-245fa | | | 25.17 | |
| C-Component | | | | |
| Catalyst[3] | 5.0 | 5.0 | 6.0 | 5.0 |
| FOAM PROPERTIES | | | | |
| Cream/Firm (sec) | 20/54 | 17/66 | 14/70 | 21/41 |
| Core Density ($lb/ft^3$) | 1.79 | 1.70 | 1.77 | 1.83 |
| Closed Cells (%) | 91.03 | 90.17 | 90.91 | 89.31 |
| Friability (%) | 15.67 | 14.84 | 14.22 | 18.99 |
| Compressive Strength (psi) | 37.6 | 29.1 | 35.4 | 25.3 |
| K-factor (BTU-in/hr-$ft^2$-°F) | | | | |
| Initial | 0.149 | 0.156 | 0.142 | 0.131 |
| 10 day | 0.160 | 0.167 | 0.155 | 0.153 (11 day) |
| 20 day | 0.165 | 0.173 | 0.161 | 0.160 |
| 30 day | 0.169 | 0.175 | 0.164 | 0.166 |

FOOTNOTES:

1. MONDUR MR-200 = polymethylene polyphenyl polyisocyanate having an equivalent weight of 138 and a viscosity of ~ 1800 cps at 25°C. (supplied by Bayer Corporation).
2. Terate 2541 = aromatic polyester polyol having an equivalent weight of 236 and a viscosity of 3,333 cps at 25°C. (supplied by Cape Industries).
3. Catalyst = a mixture employed in the form of a solution in polyethylene glycol (PEG-200) in a 1:1:1:2 weight ratio of potassium octoate (70% in diethylene glycol):2,4,6-tris[dimethylaminomethyl]phenol: N-hydroxyisopropyl methyl ammonium salt of formic acid: PEG-200, respectively (supplied by the Elé Corporation).

EXAMPLE 2

This example illustrates the synthesis of polyisocyanurate foams (12% trimer) utilizing the blowing agents HFC-245ca, HFC-245eb, HFC-245fa, and HCFC-141b, and an evaluation of the foams' shrinkage resistance and other foam properties.

Foams E-H were prepared from the ingredients and quantities thereof listed in Table II below. The foam shrinkage

studies were conducted with the use of a heated L-mold. The L-mold, which has both a horizontal and a vertical leg, was preheated to 140°F. The foam preparations were conducted as described in Example 1, and after all the ingredients were mixed vigorously for the additional 10 seconds in the quart can, the can containing the ingredients was immediately placed into the port of the mold's horizontal leg. The mold port cover was replaced and clamped. The foam was allowed to cure for 5 minutes at the 140°F. mold temperature and then the mold was opened.

After removal from the mold, the rise height of the cured foam portion which had been contained in the vertical leg was measured and this portion was cut from the rest of the sample and post-cured in a 140°F. oven for 2 hours. A 10" x 10" x 1" test specimen was cut from the center of this post-cured foam, and the specimen's volume (initial) was recorded. The test specimen was placed in a 0°F. freezer for 18 hours. After its removal from the freezer, and equilibration for ca. 15 minutes to room temperature, the test specimen's volume (final) was determined by water displacement. The amount of shrinkage was calculated using the following formula:

$$\% \text{ Shrinkage} = \frac{\text{Initial Volume-Final Volume}}{\text{Initial Volume}} \times 100$$

The percent shrinkage and other properties of Foams E-H are shown in Table II. The results reveal that use of the HFC blowing agents leads to good shrinkage resistance, which is considerably superior to that of the foam made with HCFC-141b.

TABLE II

| SYNTHESIS AND PROPERTIES OF POLYISOCYANURATE FOAMS | | | | |
|---|---|---|---|---|
| INGREDIENTS | FOAMS | | | |
| A-Components | E | E | G | H |
| Mondur MR-200[1] | 185.3 | 185.3 | 185.3 | 186.77 |
| HFC-245ca | 27.09 | | | |
| HFC-245eb | | 33.12 | | |
| HFC-245fa | | | 27.09 | |
| HCFC-141b | | | | 50.40 |
| Silicone surfactant | 3.0 | 3.0 | 3.0 | 2.20 |
| B-Components | | | | |
| Terate 2541[2] | 114.7 | 114.7 | 114.7 | 113.23 |
| HFC-245ca | 25.17 | | | |
| HFC-245eb | | 25.17 | | |
| HFC-245fa | | | 25.17 | |
| C-Component | | | | |
| Catalyst[3] | 5.0 | 5.0 | 6.0 | 6.50 |
| FOAM PROPERTIES | | | | |
| Cream/Firm (sec) | 18/51 | 15/61 | 14/70 | 18/36 |
| Core Density (lb/ft$^3$) | 2.09 | 1.95 | 1.97 | 1.98 |
| Rise Height (in) | 17 3/4 | 21 7/8 | 20 1/2 | 18 1/8 |
| Shrinkage (at 0°F %) | 5.37 | 13.60 | 8.93 | 18.65 |
| Mobil 45° (% wt. loss) | 8.23 | 13.6 | 12.63 | --- |

FOOTNOTES:
1. Of Example 1.
2. Of Example 1.
3. Of Example 1.

EXAMPLE 3

This example illustrates the synthesis of polyisocyanurate foams (14% trimer) utilizing the blowing agents HFC-245ca, HFC-245eb, HFC-fa, and HCFC-141b, and an evaluation of the foams' shrinkage resistance and other foam properties.

Foams I-N were prepared from the ingredients and quantities thereof listed in Table III below. The foam preparations and shrinkage and rise height determinations were conducted as described in Example 2. The foams' properties are shown in the table. The results indicate that the HFC compounds serve as superb replacement blowing agents for HCFC-141b.

TABLE III

| SYNTHESIS AND PROPERTIES OF POLYISOCYANURATE FOAMS | | | | | | |
|---|---|---|---|---|---|---|
| INGREDIENTS | FOAMS | | | | | |
| A-Components | I | J | K | L | M | N |
| Mondur MR-200[1] | 197.8 | 197.8 | 197.8 | 197.8 | 197.7 | 199.04 |
| HFC-245ca | 29.82 | | | | | |
| HFC-245eb | | 32.00 | 35.97 | 29.82 | | |
| HFC-245fa | | | | | 29.82 | |
| HCFC-141b | | | | | | 51.0 |
| Silicone surfactant | 3.0 | 3.0 | 3.0 | 3.0 | 3.0 | 2.20 |
| B-Components | | | | | | |
| Terate 2541[2] | 102.0 | 102.2 | 102.2 | 102.2 | 100.96 | |
| HFC-245ca | 22.44 | | | | | |
| HFC-245eb | | 22.44 | 22.44 | 22.44 | | |
| HFC-245fa | | | | | 22.44 | |
| HCFC-141b | | | | | | |
| C-Component | | | | | | |
| Catalyst[3] | 5.0 | 6.0 | 6.0 | 6.0 | 6.0 | 6.50 |
| FOAM PROPERTIES | | | | | | |
| Cream/Firm (sec) | 19/52 | 15/57 | 15/57 | 15/73 | 21/120 | 18/34 |
| Core Density ($lb/ft^3$) | 2.07 | 2.08 | 1.94 | 2.00 | 1.98 | 2.06 |
| Rise Height (in) | 18 1/4 | 21 7/8 | 21 7/8 | 19 3/4 | 21 5/8 | 18 3/4 |
| Shrinkage (at 0°F%) | --- | 7.87 | 15.24 | --- | --- | --- |
| Mobil 45° (% wt.loss) | --- | 8.60 | 9.93 | --- | --- | 4.82 |
| Hot Plate (% wt/thick. loss) | 18.82/-0.70 | --- | --- | 17.40/1.59 | 18.80/7.46 | 18.92/5.30 |

FOOTNOTES:
1. Of Example 1.
2. Of Example 1.
3. Of Example 1.

## Claims

1. A closed cell, rigid, isocyanate-based polymer foam which comprises the reaction product of a polyisocyanate and a polyester polyol or a mixture of a polyester polyol and at least one other isocyanate-reactive compound in the presence of a blowing agent comprising a hydrofluorocarbon having 3 to 7 carbon atoms and no chlorine atom or a mixture of the hydrofluorocarbon and at least one co-blowing agent.

2. The foam of claim 1 wherein the polyester polyol is the reaction product of a polycarboxylic acid component and an aliphatic diol of the formula:

$$HO\text{-}R\text{-}OH$$

wherein R is a divalent radical selected from the group consisting of:

(a) alkylene radicals containing from 2 through 6 carbon atoms,
(b) radicals of the formula:

$$-(R^1O)_m\text{-}R^1\text{-}$$

wherein $R^1$ is a alkylene radical containing from 2 through 6 carbon atoms, and m is a integer of from 1 through 4, and
(c) mixtures thereof.

3. The foam of claim 1 wherein the polyester polyol is the reaction product of an aromatic polycarboxylic acid component and a polyol component.

4. The foam of claim 3 wherein the polycarboxylic acid component is selected from the group consisting of (a) ester-containing by-products from the manufacture of dimethyl terephthalate, (b) scrap polyalkylene terephthalates, (c) phthalic anhydride, (d) residues from the manufacture of phthalic acid or phthalic anhydride, (e) terephthalic acid, (f) residues from the manufacture of terephthalic acid, (g) isophthalic acid, (h) trimellitic anhydride, and (i) combinations thereof.

5. The foam of claim 1 wherein the hydrofluorocarbon comprises at least one polyfluoroalkane of the formula:

$$CX_3\text{-}CY_2\text{-}R$$

wherein each of the X radicals independently represents hydrogen or fluorine and either:

(1) the $CY_2$ radical represents $CH_2$, CHF or $CH(CF_3)$ and R represents $CH_2F$, $CHF_2$, $CH_3$, $CF_3$, $CF_2\text{-}CH_3$, $CF_2\text{-}CH_2F$, $CH_2\text{-}CH_3$, $CH_2\text{-}CH_2\text{-}CH_3$, or $CH(CH_3)\text{-}CH_3$; or
(2) the $CY_2$, radical represents $CF_2$ and R represents $CH_2F$, $CHF_2$, $CH_3$, $CF_2\text{-}CH_3$, $CF_2\text{-}CH_2F$, $CH_2\text{-}CH_3$, $CH_2\text{-}CH_2\text{-}CH_3$, or $CH(CH_3)\text{-}CH_3$;

wherein the polyfluoroalkane contains at least two fluorine atoms, and
wherein when the $CY_2$ radical represents a $-CH_2-$ group and the R radical represents a $-CH_2\text{-}CH_3$ group, respectively, then the $CX_3$ radical represents a $CHF_2$ -group.

6. The foam of claim 5 wherein $X_3$, $Y_2$ and R are present in one of the following combinations:

| $X_3$ | $Y_2$ | R |
|---|---|---|
| $F_3$ | $H_2$ | $CH_2F$ |
| $F_3$ | HF | $CH_2F$ |
| $F_3$ | $H_2$ | $CHF_2$ |

(continued)

| $X_3$ | $Y_2$ | R |
|---|---|---|
| $HF_2$ | $F_2$ | $CH_2F$ |
| $F_3$ | HF | $CH_3$ |
| $H_3$ | $F_2$ | $CH_3$ |
| $F_3$ | $F_2$ | $CF_2$-$CH_3$ |
| $F_3$ | HF | $CF_2$-$CH_3$ |
| $F_3$ | $H_2$ | $CF_2$-$CFH_2$ |
| $F_3$ | $H_2$ | $CH_2$-$CH_3$ |
| $H_3$ | $F_2$ | $CF_2$-$CH_3$ |
| $F_3$ | $H_2$ | $CF_2$-$CH_3$ |
| $F_3$ | $HCF_3$ | $CH_3$ |
| $F_3$ | $H_2$ | $CH_2$-$CH_2$-$CH_3$ |
| $F_3$ | $H_2$ | -$CH(CH_3)$-$CH_3$ |
| $F_3$ | $H_2$ | $CF_3$ |
| $F_3$ | $F_2$ | $CH_3$ |
| $HF_2$ | HF | $CHF_2$ |

7. The foam of claim 5 wherein the polyfluoroalkane is selected from the group consisting of 1,1,1,3,3,3-hexafluoropropane, 2,2,4,4-tetrafluorobutane, 1,1,1,3,3,3-hexafluoro-2-methylpropane, 1,1,1,3,3-pentafluoropropane, 1,1,1,2,2-pentafiuoropropane, 1,1,1,2,3-pentafluoropropane, 1,1,2,3,3-pentafluoropropane, 1,1,2,2,3-pentafluoropropane, 1,1,1,3,3,4-hexafluorobutane, 1,1,1,3,3-pentafluorobutane, and mixtures thereof.

8. The foam of claim 1 wherein the polymer is selected from the group consisting of a polyurethane and a polyisocyanurate.

9. The foam of claim 1 which includes at least one additive selected from the group consisting of viscosity reducers, flame retardants, dispersing agents, piasticizers, mold release agents, antioxidants, compatibility agents, fillers and pigments.

10. The foam of claim 1 wherein the co-blowing agent is selected from the group consisting of other hydrofluorocarbons, hydrochlorofluorocarbons, hydrofluoroethers, hydrocarbons, other ethers, esters, and mixtures thereof.

11. The foam of claim 1 wherein the polymer is a polyisocyanurate.

12. The foam of claim 11 wherein the hydrofluorocarbon comprises at least one polyfluoroalkane of the formula:

$$CX_3\text{-}CY_2\text{-}R$$

wherein each of the X radicals independently represents hydrogen or fluorine and either:

(1) the $CY_2$ radical represents $CH_2$, CHF or $CH(CF_3)$ and R represents $CH_2F$, $CHF_2$, $CH_3$, $CF_3$, $CF_2$-$CH_3$, $CF_2$-$CH_2F$, $CH_2$-$CH_3$, $CH_2$-$CH_2$-$CH_3$, or $CH(CH_3)$-$CH_3$; or
(2) the $CY_2$ radical represents $CF_2$ ad R represents $CH_2F$, $CHF_2$, $CH_3$, $CF_2$-$CH_3$, $CF_2$-$CH_2F$, $CH_2$-$CH_3$, $CH_2$-$CH_2$-$CH_3$, or $CH(CH_3)$-$CH_3$;

wherein the polyfluoroalkane contains at least two fluorine atoms, and
wherein when the $CY_2$ radical represents a -$CH_2$- group ad the R radical represents a -$CH_2$-$CH_3$ group, respectively, then the $CX_3$ radical represents a $CHF_2$ -group.

13. The foam of claim 12 wherein the polyfluoroalkane is selected from the group consisting of 1,1,1,3,3,3-hexafluoropropane, 2,2,4,4-tetrafluorobutane, 1,1,1,3,3,3-hexafluoro-2-methylpropane, 1,1,1,3,3-pentafluoropropane, 1,1,1,2,2-pentafluoropropane, 1,1,1,2,3-pentafluoropropane, 1,1,2,3,3-pentafluoropropane, 1,1,2,2,3-pentafluoropropane, 1,1,1,3,3,4-hexafluorobutane, 1,1,1,3,3-pentafluorobutane, and mixtures thereof.

14. The foam of claim 12 wherein the polymer is the reaction product of the polyisocyanate and an aromatic polyester polyol.

15. The foam of claim 12 wherein the polymer is the reaction product of an aromatic polyisocyanate and a polyester polyol prepared from an aromatic polycarboxylic acid component and an aliphatic diol of the formula:

$$HO\text{-}R\text{-}OH$$

wherein R is a divalent radical selected from the group consisting of:

(a) alkylene radicals containing from 2 through 6 carbon atoms
(b) radicals of the formula:

$$-(R^1O)_m\text{-}R^1\text{-}$$

wherein $R^1$ is an alkylene radical containing from 2 through 6 carbon atoms and m is an integer of from 1 through 4, and
(c) mixtures thereof.

16. The foam of claim 15 wherein the aromatic polycarboxylic acid component is selected from the group consisting of (a) ester-containing by-products from the manufacture of dimethyl terephthalate, (b) scrap polyalkylene terephthalates, (c) phthalic anhydride, (d) terephthalic acid, (e) residues from the manufacture of terephthalic acid, and (f) combinations thereof.

17. The foam of claim 15 wherein the co-blowing agent is selected from the group consisting of other hydrofluorocarbons, hydrochlorofluorocarbons, hydrofluoroethers, hydrocarbons, other ethers, esters, and mixtures thereof.

18. A process for producing a closed cell, rigid, isocyanate-based polymer foam which comprises bringing together under foam-forming conditions a composition comprising a polyisocyanate and a polyester polyol or a mixture of a polyester polyol and at least one other isocyanate-reactive compound in the presence of a blowing agent comprising a hydrofluorocarbon having 3 to 7 carbon atoms and no chlorine atom or a mixture of the hydrofluorocarbon and at least one co-blowing agent.

19. A laminate comprising at least one facing sheet adhered to the foam of claim 1.

20. A process for producing a laminate comprising contacting at least one facing sheet with the foam-forming composition of claim 1, and thereafter foaming and curing the foam-forming composition.

European Patent Office

# EUROPEAN SEARCH REPORT

Application Number
EP 97 11 9618

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 4 931 482 A (LAMBERTS WILHELM ET AL)<br>* claims 1,5-7 *<br>* column 2, line 54 - line 57 *<br>* column 3, line 30 - line 41 * | 1,8,9, 11,18 | C08J9/14 //C08L75:06 |
| X | US 5 562 857 A (WERNER JOACHIM ET AL)<br>* claims 1,4 *<br>* column 4, line 33 - line 48 *<br>* column 5, line 18 - line 26 *<br>* column 6, line 11 - line 39 * | 1,8-11, 18 | |
| X | EP 0 726 281 A (CELOTEX CORP ;APACHE PROD CO (US))<br>* claims 1-11 *<br>* page 7, line 39 - line 54 * | 1-20 | |
| X | EP 0 432 672 A (HOECHST AG)<br>* claims 1-7 *<br>* page 2, line 38 - page 3, line 42 * | 1,18 | TECHNICAL FIELDS SEARCHED (Int.Cl.6) |
| X | WO 92 00345 A (ALLIED SIGNAL INC)<br>* claims 1-10 *<br>* page 4, line 1 - line 9 *<br>* page 11, line 20 - line 39 * | 1,8,11, 18 | C08J |
| X | EP 0 351 614 A (BASF AG)<br>* claims 1-4,23,24 *<br>* page 5, line 16 - page 6, line 1 *<br>* page 8, line 19 - line 53 *<br>* page 11, line 33 - line 37 *<br>* example 6 * | 1-4,8,9, 11,18 | |

The present search report has been drawn up for all claims

| Place of search | Date of completion of the search | Examiner |
|---|---|---|
| THE HAGUE | 19 February 1998 | Van Puymbroeck, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)